# EUROPEAN PATENT SPECIFICATION

(11) **EP 2 343 548 B1**
(45) Date of publication and mention of the grant of the patent: **27.12.2017**
(21) Application number: 11000085.8
(22) Date of filing: 07.01.2011
(51) Int. Cl.: G01N 29/024, G01N 29/032, G01N 29/22, G01N 29/32

(54) **Method and device for acoustically determining characteristics of a medium in a container**
Verfahren und Vorrichtung zur akustischen Bestimmung der Eigenschaften eines Mediums in einem Behälter
Procédé et dispositif permettant de déterminer acoustiquement les caractéristiques d'un milieu dans un conteneur

(30) Priority: 08.01.2010 EP 10150327
(43) Date of publication of application: 13.07.2011
(73) Proprietor: Hochschule für angewandte Wissenschaften Fachhochschule Coburg, 96450 Coburg (DE)
(72) Inventor: Friedrich, Denise, 96274 Itzgrund (DE); Kaul, Christian, 96145 Sesslach (DE); Lindner, Gerhard, 96450 Coburg (DE); Faustmann, Hendrik, 74613 Öhringen (DE); Münch, Michael, 96450 Coburg (DE)
(74) Representative: Maikowski & Ninnemann Patentanwälte Partnerschaft mbB

(56) References cited:
- EP-A2- 2 338 047
- WO-A2-02/077635
- WO-A2-2008/034878

## Description

The invention relates to a method and a device for determining characteristics of a medium according to claims 1 and 7, respectively.

It is known from the prior art to use acoustic chemical sensors in order to monitor properties of liquid or soft media. For example, an acoustic chemical sensor is disclosed in "Process Monitoring Using Ultrasonic Sensor Systems", H. Henning, J. Rautenberg, Ultrasonics 44, pp. e1395-e1399, 2006.

Further, document WO 2008/034878 A2 discloses a method for determining characteristics of a medium in an acoustic waveguide, wherein surface acoustic waves are excited in the waveguide that at least partially are converted into volume sound waves of the medium.

Moreover, WO 02/077635 A2 describes a method for determining constituent fluids for a multiphase flow in a pipe using two transducers on a pipewall. wherein the transducers are longitudinally offset in a longitudinal direction parallel to the flow. A sonic wave is generated by one of the transducers and split into a pipewall wave and a transverse wave that are detected by the other transducer.

It is an object of the invention to provide a method and a device for determining characteristics of a liquid or soft media as accurate as possible.

This problem is solved by the method according to claim 1 and the device according to claim 7. Embodiments of the invention are contained in the dependent claims.

According to the invention, a method for determining characteristics of a medium is provided, the method comprising the steps of:
a) providing a container delimiting an interior space filled with the medium to be characterized such that an inner surface of a side wall of the container forms an interface with the medium,
b) exciting acoustic waves in the container side wall by means of at least one transmitter,
c) converting at least a part of the energy associated with the acoustic waves excited in the side wall of the container into volume sound waves of the medium,
d) reconverting at least a part of the energy associated with the volume sound waves into acoustic waves in the container side wall,
e) receiving acoustic waves evoked by the transmitter by at least a first and a second receiver,
f) determining a temperature of the medium and/or the container side wall from a signal (an electrical signal) generated by the first receiver upon receipt of acoustic waves travelling from the transmitter to the first receiver in the container side wall,
g) determining characteristics of the medium from a signal generated by the second receiver upon receipt of acoustic waves generated by reconverting energy of the volume sound waves according to step d), wherein
h) the temperature determined using the signal of the first receiver is taken into account when evaluating the signal of the second receiver.

The method according to the invention thus provides the possibility of acoustically determining both the temperature of the medium and/or the container side wall and characteristics (other than the temperature) of the medium.

The properties (such as the amplitude and the velocity) of the volume sound waves (compression waves) excited in the medium (step c)) depend on both the characteristics to be determined and the temperature of the medium such that the receiver signal used in step f) for determining characteristics of the medium in any case will reflect a change of the temperature of the medium. Thus, a temperature change of the medium (e.g. caused by a chemical reaction in the medium or a temperature change of the surroundings of the medium) will influence the receiver signal and may lead to inaccurate results.

However, the receiver signal related to acoustic waves that travel along the container side wall only (and not trough the medium) can be used to determine the temperature of the side wall and thus the medium. This is possible due to the fact that the acoustic waves travelling directly from the transmitter to the receiver in the container side wall predominantly depend on the temperature of the side wall or the medium. The so determined temperature is then used to determine characteristics of the medium according to step g), i.e. the acoustically determined temperature is used to compensate a temperature dependence of the receiver signal generated upon receipt of acoustic waves generated by reconverting energy of the volume sound waves. Therefore, using the receiver signal according to step f) the temperature of the medium is determined and taken into account for the evaluation according to step g) (e.g. used for correcting the result obtained in step g) such there is no need for an additional temperature sensor).

The transmitter-receiver arrangement may be calibrated, wherein, for example, the medium and/or the container side wall is heated up to a plurality of pre-determined temperatures and the receiver signal is registered for each of these temperatures.

Further, the calibration may comprise measuring different pre-determined states of the medium depending on the characteristics to be determined (e.g. different compositions of the medium). It is, of course, possible that, using the receiver signal, properties (such as the transmission time and the amplitude) of the acoustic waves travelling directly to the receiver may be determined and directly used for obtaining (or correcting) the result according to step g) without explicitly linking the signal properties to a temperature value.

The determination of characteristics of the medium and the temperature (i.e. steps f) and g)) can be carried out simultaneously or at least essentially simultaneously, wherein the receiver signals generated in steps f) and g) may be evoked by the same acoustic wave (e.g. in the form of an acoustic pulse) excited by the transmitter, wherein, however, the receiver signals may be received with a slight time delay, the time delay being predeterminable and being dependent, for example, on the geometry of the container. It is, however, also possible that steps g) and f) are carried out consecutively, wherein step g) can be carried out before step f) or vice versa.

The acoustic waves evoked by the transmitter are received by a first and a second receiver, wherein in step f) the temperature is determined from a signal generated by the first receiver and in step g) characteristics of the medium are determined from a signal generated by the second receiver. It is, of course, also possible that more than two receivers are used.

In another example of the invention, step b) comprises generating acoustic waves in the container side wall in the form of at least one acoustic pulse, wherein steps g) and f) may comprise determining a transmission time (transit time) and/or an amplitude of the acoustic pulse and determining characteristics of the medium and the temperature of the medium and/or the container side wall using the transmission time and/or the amplitude of the acoustic pulse.

For example, the transmission time and the amplitude of the acoustic pulse travelling through the medium (after it has been converted into a volume sound wave according to step c)) will depend both on the characteristics and the temperature of the medium,
wherein the transmission time and the amplitude of an acoustic pulse travelling from the transmitter towards the receiver directly in the container sidewall predominantly depends on the temperature of the container side wall (i.e. the medium).

Thus, by measuring the transmission time and/or the amplitude of the acoustic pulse travelling in the container side wall (for example, after an appropriate calibration as mentioned above) the temperature of the side wall and thus the temperature of the medium can be determined. It is noted that in order to be able to link the side wall temperature to the temperature of the medium a model of the heat transfer between the container side wall and the medium could be used in order to take into account that the container side wall and the medium may not yet be in thermal equilibrium after a temperature change of either the medium or the container side wall. Also, in order to establish a quick thermal equilibrium between the container side wall and the medium a good thermal contact between the container and the medium may be provided. Further, a container having a small side wall thickness (for example, around or below 1 mm) and/or consisting of a material with good thermal conductivity could be used.

Knowing the temperature of the side wall (and thus of the medium) it is possible to take into account the temperature dependence of the transmission time and the amplitude of the volume acoustic pulse travelling within the medium (i.e. the temperature dependence of the receiver signal used according to step g)) in order to accurately determine characteristics of the medium.

Also, steps g) and f) may comprise determining characteristics of the medium and the temperature simultaneously at at least a first and a second point in time, i.e. both the characteristics of the medium and the temperature are determined at the first point in time and the characteristics of the medium and the temperature are determined again at the second point in time such that the characteristics of the medium are monitored over time. It is possible that a change of the receiver signal (e.g. a change of the transmission time and/or the amplitude of an acoustic pulse) travelling within the container side wall (according to step f)) is used to determine a change of the temperature, which in turn is used to correct the receiver signal (e.g. a transmission time and/or amplitude component) of the acoustic wave in the medium (according to step g) in order to eliminate the temperature effect on the receiver signal used in step g) (e.g. on the transmission time and/or the amplitude of the signal).

For example, the characteristics of the medium determined in step g) comprise a concentration of at least one substance in the medium (i.e. the characteristics may comprise a single parameter, only). For example, the concentration of an agent in a solvent is determined (for example, monitored over time). Also, the characteristics may comprise the composition of a medium in the form of a two or more component mixture, wherein changes of the concentration or composition of the medium resulting from a chemical reaction may be monitored such that e.g. the reaction kinetics and/or the heat balance may be monitored on-line.

For example, the method according to the invention may be used for the control of the production of a urea-solution with a distinct concentration of dissolved urea via dissolving solid urea in water, since the dissolution process results in a concurrent change of the temperature of the solution. In an example, a urea-solution with a urea-concentration of 32.5 % is used for the selective catalytic reduction of nitrogen oxides in the exhaust gas of diesel engines by adding it to the exhaused gas stream at a rate proportional to the diesel consumption.

For example, acoustic wave pulses with a frequency of about 100 kHz - 10MHz, especially 1 MHz, can be generated with repetition rates of about 1 - 10 kHz, e.g. 1 kHz, such that reaction kinetics could be followed with a time resolution in the sub-millisecond range. This, however, may require, for example, a rapid thermal equilibration between the side wall of the container and the medium as already mentioned above or a knowledge of the heat transfer between the container side wall and the medium as a function of time.

According to another embodiment of the invention, the transmitter generates surface acoustic waves in the container side wall, wherein the frequency of the acoustic waves generated by the transmitter is chosen in dependence of the thickness of the container side wall in such a way that Lamb waves or Lamb-Rayleigh waves are excited in the container side wall.

In the case of Lamb waves or Lamb-Rayleigh-waves the displacement of opposite surfaces of the container side wall excited by the transmitter is correlated such that, in particular, the amplitude and/or the phases of the displacement movement of the inner and outer surfaces of the side wall are interrelated. For example, the acoustic waves excited in the side wall will be mainly or only of the Lamb wave type if the thickness of the side wall is substantially smaller (e.g. at least five times smaller) than the wavelength of the excited acoustic waves. The frequency of the excited acoustic waves thus has to be chosen depending on the thickness of the side wall and taking into account the dispersion relation of the Lamb waves.

However, as set forth above, e.g. also a transition type of Lamb waves and Rayleigh waves can be used, i.e. the thickness (the distance between the outer and the inner side) of the container side wall can be of the same order of magnitude as the wavelength of the excited acoustic waves. In that case, there can still be a correlation between the displacement movement of the opposite surfaces of the side wall. For example, the thickness of the side wall is in the range between 0.1 mm to 5 mm. The excitation frequency generated by the transmitter may be chosen to be in the range between 500 kHz and 2 MHz, in particular between 800 kHz and 1.5 MHz.

The transmitter and/or the receiver may be interdigital piezo-electric transducers. It is noted, however, that the term "transmitter" is not restricted to a piezo-electric transducer. Other embodiments of the invention comprise a transmitter in the form of a (e.g. pulsed) laser that excites the acoustic waves in the substrate based on thermoelastic effects. Also, a wedge ("wedge converter") could be used to excite the acoustic waves or a comb-like vibrator ("comb converter"), wherein the wedge converter and/or the comb converter may be used in combination with a piezo-electric transducer. Of course, different transmitter types could also be used in combination. Also, the receiver does not necessarily have to be an interdigital piezo-electric transducer either. For example, a receiver in the form of an optical displacement detector such as an interferometer or a laser-doppler-vibrometer could be used.

The invention also relates to a device for determining characteristics of a medium and in particular for carrying out the method as described above, the device comprising:
- a container delimiting an interior space filled with the medium to be characterized such that an inner surface of a side wall of the container forms an interface with the medium;
- at least one transmitter for exciting acoustic waves in the container side wall in such a way that at least a part of the energy associated with the acoustic waves excited in the side wall of the container is converted into volume sound waves of the medium,
- wherein at least a part of the energy associated with the volume sound waves into acoustic waves in the container side wall;
- at least a first and a second receiver for receiving acoustic waves evoked by the transmitter;
- means for determining a temperature of the medium and/or the container side wall from a signal generated by the first receiver upon receipt of acoustic waves travelling from the transmitter to the first receiver in the container side wall;
- means for determining characteristics of the medium from a signal generated by the second receiver upon receipt of acoustic waves generated by reconverting energy of the volume sound waves according to step d), , wherein
- the temperature determined by the means for determining a temperature is taken into account by the means for determining characteristics of the medium when evaluating the signal of the second receiver.

In particular, the transmitter and at least one of the receivers are arranged on an outer side of the container side wall, the outer side facing away from the medium. Further, at a gaseous atmosphere or vacuum can be present at the outer side of the side wall (i.e. outside the container).

For example, the first receiver is arranged on a first portion of the container side wall and the second receiver is arranged on a second portion of the container side wall, the first and the second side wall portion being arranged opposite to one another along a direction perpendicular to the first and/or the second side wall portion.

For example, the transmitter and the first receiver are arranged on the first portion of the container side wall, wherein the second receiver is arranged on the second portion of the side wall. In other words, the first receiver receives mainly acoustic waves travelling directly from the transmitter to the second receiver in the container side wall. The second receiver, on the other hand, is arranged in such a way that the acoustic waves will have crossed the medium before arriving at the first receiver such that the signal generated by the first receiver is evoked by volume sound waves generated in the medium and at least partially reconverted into surface acoustic waves in the first side wall portion.

It is also possible that a third receiver is arranged on the second portion of the side wall, i.e. the first portion of the container side wall carries the transmitter and the first receiver, wherein the second portion of the container side wall carries the second and the third receiver. For example, the transmitter is arranged between (e.g. in the middle of) the second and the third receiver such that a first part of the volume acoustic waves created in the medium will be transmitted towards the second receiver and second part of the volume sound waves will be transmitted towards the third receiver.

The container may be an acoustic waveguide, which, for example, comprises a first and a second plate or consists of a first and a second plate, the first plate forming the first side wall portion and the second plate forming the second side wall portion. For example, the first and the second plate are arranged within a distance (for example, at least 10 mm or at least 20 mm) from one another and are not (at least not directly) connected to one another. It is possible that the first and the second plate are arranged essentially parallel to one another.

For example, the acoustic waveguide has the form of a longitudinally extending channel structure (having, e.g., a rectangular cross section), wherein the first and the second plate form part of a side wall of the channel structure. The container, however, may also formed by an acoustic waveguide (or form part of an acoustic waveguide) that has a non-rectangular cross section.

According to another example of the invention, the container is formed by a receptacle, wherein the first and the second side wall portion are integrally connected to one another. For example, the container is a test tube, a Dewar vessel or an Erlenmeyer flask. The container may be integrally formed (e.g. of glass, metal or plastic).

The means for determining characteristics of the medium and/or the means for determining a temperature of the medium and/or the container side wall may be realised as a programmed electronic circuit or a software running on a programmable device. In particular, the programmed electronic circuit or the programmable device comprises or is connected to an interface for receiving the electrical signal of the receiver.

Embodiments of the invention will be described in more detail hereinafter with reference to the drawings, in which:
- Fig. 1: shows a device for determining characteristics of a medium according to an embodiment of the invention;
- Fig. 2A: shows a device for determining characteristics of a medium according to another embodiment of the invention;
- Fig. 2B: schematically depict signals generated by the receivers of the device shown in Figure 2A;
- Fig. 3: shows a device according to yet another embodiment of the invention;
- Fig. 4: illustrates transmission times of an acoustic pulse in ethanol and water, respectively, as a function of temperature measured with the device shown in Fig. 3;
- Fig. 5: illustrates transmission times of acoustic pulses travelling through different ethanol-water-solutions as a function of temperature;
- Fig. 6: Illustrates transmission times of acoustic pulses travelling through different urea-water mixtures as a function of temperature;
- Fig. 7: illustrates transmission times for both acoustic pulses travelling in the container side wall and acoustic pulses travelling through the medium in the form of different urea-water-mixtures as a function of temperature; and
- Fig. 8: illustrates transmission times of acoustic pulses travelling through a urea-water-mixture for different urea concentrations at a constant temperature.

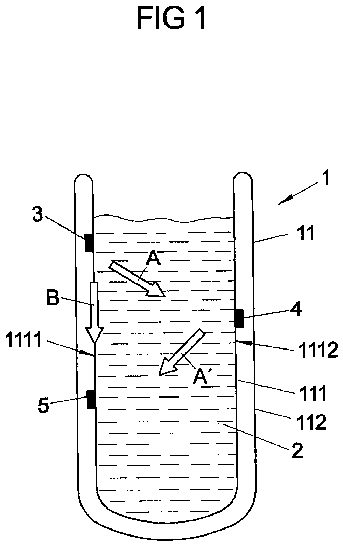

Figure 1 shows a device for determining characteristics of a medium according to an embodiment of the invention. The device comprises a container in the form of a receptacle 1 having a side wall 11 that delimits an interior space which is filled with a medium in the form of liquid 2. In particular, the container 1 is a Dewar vessel having an inner side wall 111 and an outer side wall 112, wherein a vacuum might be present between the inner and the outer side wall 111, 112.

A transmitter 3 for generating surface acoustic waves in the side wall of the container is arranged on a first portion 1111 of the inner side wall 111. Further, a first receiver 5 is arranged on the first side wall portion 1111 and second receiver 4 on a second portion 1112 of the inner side wall 111, wherein the first and the second side wall portion 1111, 1112 extend essentially parallel to one another such that the second side wall portion is arranged opposite to the first side wall portion with respect to a direction perpendicular to the first and the second side wall portion. The transmitter 3 and the first receiver 5 may be arranged in a row along the longitudinal (vertical) axis of the vessel.

A part of the surface acoustic waves excited in the first side wall portion 1111 will be converted into volume sound waves (indicated by arrow A) in the liquid 2, wherein, in turn, a part of the generated volume sound waves A will be reconverted into surface acoustic waves in the second side wall portion 1112 of the inner side wall 111 and will be detected by the second receiver 4.

The first receiver 5, in contrast, will detect essentially only surface acoustic waves (indicated by arrow B) travelling directly from the transmitter 3 towards the first receiver 5 within the first portion 1111 of the inner side wall 111.

The conversion of surface acoustic waves into volume sound waves in liquid 2, the propagation of the volume sound waves and the reconversion of the volume sound waves depend on the properties of the liquid 2; for example, on the concentration of one or more substances present in liquid 2 or the composition of liquid 2. Thus, using the signal produced by the second receiver 4 upon receiving acoustic waves a concentration of a substance in liquid 2 or a composition of the liquid can be determined.

However, the properties (such as the transmission time and the amplitude) of the acoustic waves arriving at the second receiver 4 not only depend on the concentration of a substance in liquid 2 or the composition but also on the temperature of the liquid. Thus, a change of the liquid temperature might be interpreted as a change of the concentration or composition (or other properties of the liquid that are to be determined).

However, using the signal produced by the first receiver 5 it is possible to compensate temperature effects on the acoustic wave travelling through liquid 2. For example, the device can be calibrated such that, for example, a measured transmission time and/or amplitude of a surface acoustic wave received by the first receiver 5 can be linked to a certain temperature of the side wall and thus of a liquid 2. This temperature can be taken into account when evaluating the signal of the second receiver. In particular, a temperature change can be detected and taken into account when determining the composition of liquid 2.

The transmitter 3 and the first and the second receiver 4, 5 may be interdigital transducers, wherein the interdigital transducers are arranged on a side of the inner side wall 111 that faces away from the liquid 2, i.e. the transducers are not in contact with the liquid. Besides the operation described above, the transducers (or at least some of them) can be operated both as a transmitter and a receiver such that for example, transmitter 3 and the second receiver 4 may change their roles, i.e. the second receiver 4 is operated as a transmitter and the transmitter is operated as the second receiver.

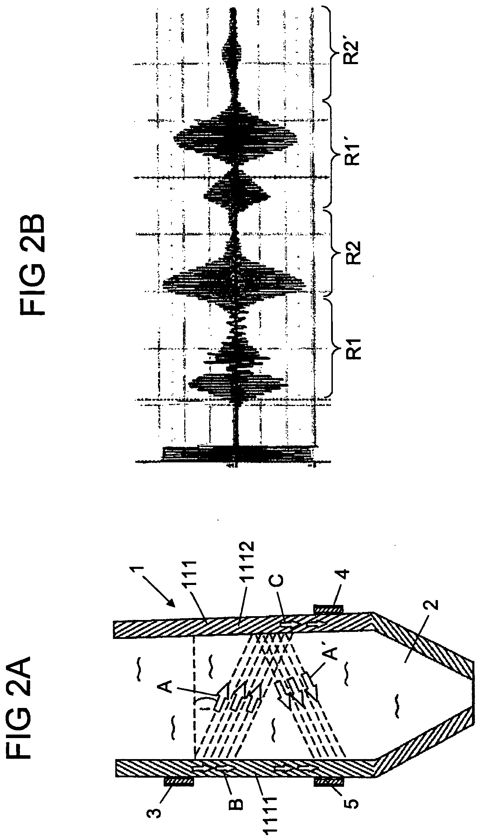

It is further possible that the first or the second receiver is omitted such that only a single receiver is used for both the determination of the temperature and the determination of the characteristics of the liquid. For example, if only the first receiver 5 is used, the receiver 5 receives the surface acoustic waves travelling along the first side wall portion 1111 as well as volume sound waves which result from reflection of the volume sound waves A at the second side wall portion 1112 towards the first side wall portion 1111 (see, for example, waves A' in Fig. 2A) and/or from reconversion of surface acoustic waves converted from volume sound waves A into surface acoustic waves on the second side wall portion 1112.

Further more, it is possible that only the second receiver 4 is used, the receiver 4 receiving the volume sound waves A as well as surface acoustic waves travelling along the first side wall portion 1111, the bottom portion of the container and the second side wall portion 1112.

Figure 2A depicts a device according to another embodiment of the invention, wherein the device comprises a container in the form of a receptacle 1 (a reaction tube). Similarly to Fig. 1, a transmitter 3 and a first receiver 5 are arranged on a first portion 1111 of a side wall 111 of the receptacle and a second receiver 4 is arranged on a second portion 1112 of the side wall.

The first receiver 5 receives acoustic waves B travelling in the first side wall portion, whereas the second receiver 4 receives waves having crossed the liquid 2 to be investigated. More specifically, the volume sound waves A excited in the liquid 2 are partially reconverted into surface acoustic waves D in the second side wall portion 1112, the reconverted waves D travelling towards the second receiver 4 in the second side wall portion 1112. Another part of the volume sound waves A is reflected at the second side wall portion 1112 such that reflected waves A' will arrive at the first receiver 5.

Figure 2B shows signals generated by the first and the second receiver in Fig. 2A, wherein the horizontal axis represents the time axis and the vertical axis the amplitude of the received waves.

A first part R1 of the signal shown in Fig. 2B is a signal generated by the first receiver 5, wherein a first portion of the first signal part R1 corresponds to surface acoustic waves travelling directly from the transmitter 3 to the first receiver 5 along the first side wall portion 1111. The signal part R1 further comprises a second portion following the first portion, the second signal portion corresponding to surface acoustic waves which were emitted in a direction opposite to waves B (i.e. an upward direction) and were reflected at edges of the first side wall portion or at the intersection of the surface of the liquid with the side wall.

The signal shown in Fig. 2B further comprises a second signal part R2 generated by the second receiver 4 upon receipt of volume sound waves A (more precisely, of the reconverted waves D), the second signal part R2 following the first signal part R1.

Following the second signal part R2 are further signals R1', R2' generated by the first and the second receiver, respectively, the further signal R1' corresponding to reflected volume sound waves, wherein the further signal R1' comprises a first and a second portion, the second portion having a greater amplitude than a first portion. The second portion of signal R1' is generated upon receipt of the reflected volume sound waves A'.

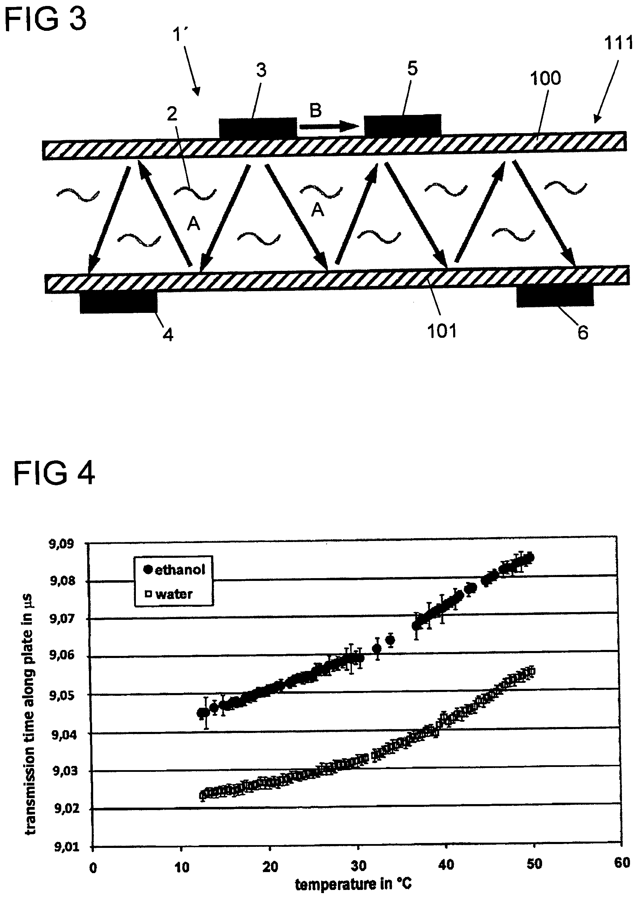

Figure 3 depicts a device for determining characteristics of a medium according to another embodiment of the invention. According to this embodiment, the device comprises a container in the form of an acoustic waveguide 1' comprising a first side wall portion in the form of a first plate 100 and a second side wall portion in the form of a second plate 101, wherein between the two plates 100, 101 an interior volume of the acoustic waveguide is formed in which a medium in the form of a liquid 2 is present. The first and the second plate may comprise glass, metal or plastic or may consist of glass, metal or plastic.

A transmitter 3 and a first receiver 5 are arranged on an outer side (facing away from liquid 2) of the first plate 100. Further, a second and a third receiver 4 is arranged on an outer side of the second plate 101. Similar to Figure 1, the transmitter 3 generates surface acoustic waves in the first plate 100, wherein a portion B of the surface acoustic waves travels directly to the first receiver 5 in the first plate 100. Another portion of the surface acoustic waves is converted into volume sound waves A in the liquid 2, wherein a fraction of the volume sound waves travels towards the second receiver 4 and another fraction travels towards the third receiver 6. The transmitter and the receivers may be interdigital transducers as mentioned above, wherein the transducers may be arranged in a sealed housing in order to prevent the transducers from coming into contact with a liquid (e.g. the liquid to be characterized or another liquid such as condensation water).

As also indicated in Figure 3, multiple reflections of the volume sound waves generated in liquid 2 may occur and may be visible in the signals produced by the receivers 4 - 6. As set forth above with respect to Figure 1, the signals generated by the receivers can be used to determine and to monitor a composition of liquid 2, e.g. a concentration of at least one substance dissolved in liquid 2. The signal generated by the first receiver 5 is used to compensate temperature effects contained in the signals produced by the second and the third receiver 4, 6.

Figure 4 depicts a measurement of transmission times of acoustic pulses for different temperatures of the liquid, wherein, for example, the pulse frequency may be set at 1 MHz. The measurement was carried out using a device as shown in Figure 3, wherein the acoustic pulses were generated by transmitter 3 and the transmission times were determined using the first receiver 5, i.e. acoustic pulses travelling directly from the transmitter 3 to the first receiver 5 in the first plate 100 were regarded. Further, the measurement was carried out after thermal equilibration of the medium and the plates 100,101.

It can be seen that in both liquids the transmission time increases with increasing liquid temperature. Thus, after a suited calibration, the transmission time measured using the signal of the first receiver can be used to determine the temperature of the medium. It is noted that there is a difference of the transmission times between the two liquids as the effective phase velocity slightly depends on the liquid present at the interface of the plate 100. The slope of the two curves, however, remains essentially unchanged. Also, the difference of the transmission times between ethanol and water is relatively small (around 20 ns) compared to the transmission time variations measured using the signal of the second receiver (i.e. regarding the transmission time of a pulse travelling through the liquid) as set forth below.

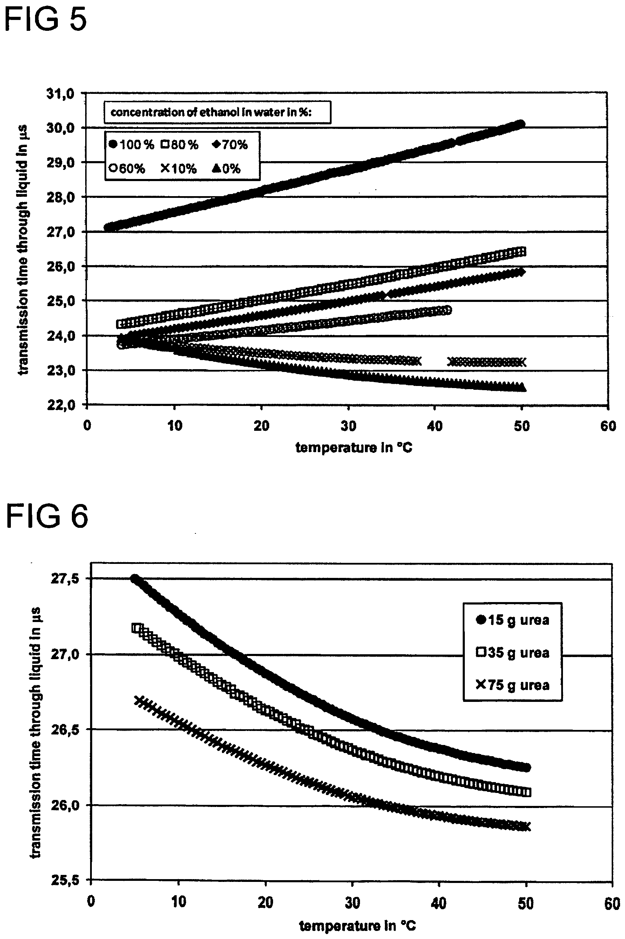

Figure 5 illustrates a signal produced by the second receiver 4 of the device shown in Figure 3 at different temperatures and compositions of the liquid, wherein different ethanol concentrations in water have been investigated. As can be seen, the transmission times depend on both the ethanol concentration and the temperature of the liquid, wherein the slope of the curves changes depending on the ethanol concentration. Thus, after having calibrated the device, the concentration of ethanol can be determined provided that the temperature is known. The temperature, however, can be derived from the signal generated by the first receiver 5 as set forth above.

Figure 6 relates to a measurement similar to Figure 5, i.e. a transmission time of an acoustic pulse arriving at the second or third receiver 4, 6 is determined at different temperatures and different compositions of the liquid, wherein the transmission times were measured a predetermined time (e.g. around 10s) after the addition of urea to water in order to approach the thermal equilibrium between the container side wall and the liquid. The liquid investigated is thus a urea-water-mixture, wherein three different urea concentrations have been measured. The transmission times depend on the urea concentration and the temperature.

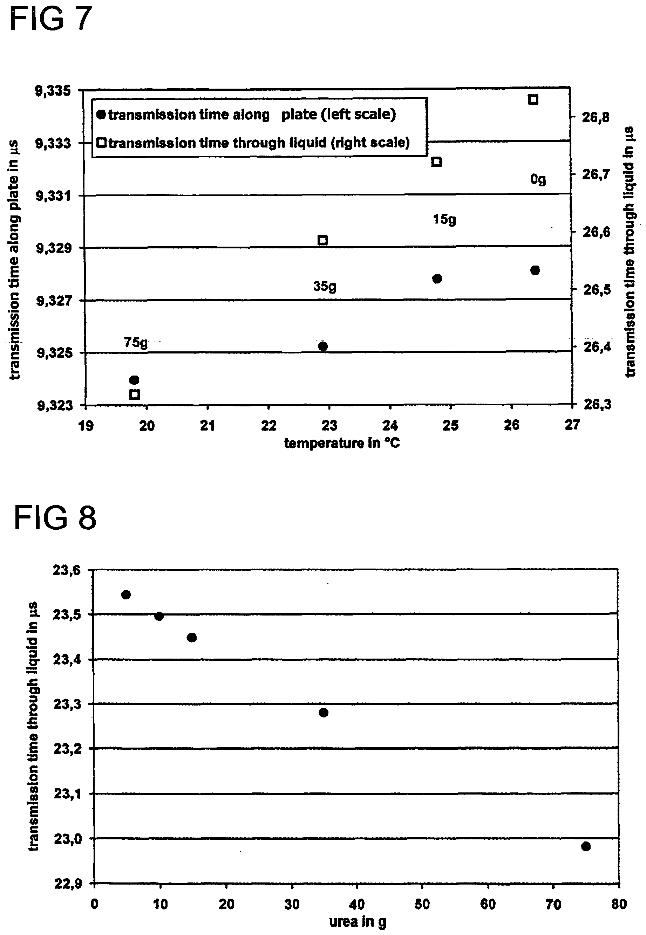

Figure 7 relates to another measurement using again the device of Figure 3, wherein a solution of urea in water has been investigated. In Figure 7, both the transmission times determined by the first and the second receiver are shown. i.e. the transmission time of acoustic pulses travelling in the first plate 100 (left scale) and the transmission time of acoustic pulses travelling across the liquid (right scale).

In addition, the temperature of the liquid was measured independently from the receiver signals (using an additional thermometer). Because of the non-zero dissolution enthalpy of urea in water, the temperature of the liquid decreases when urea is added such that the transmission time measured using the signal of the second receiver varies because of the changing concentration and the changing temperature of the liquid. In particular, the transmission time of a pulse travelling through the liquid (open squares) determined using the second (or third) receiver shows a relatively strong increase with temperature and decrease with concentration, respectively, in comparison to the transmission time of a pulse travelling along the first plate (closed squares) determined using the first receiver. As the dissolution heat changes the temperature of the liquid, an accurate measurement of the urea concentration would not possible without a simultaneous measurement of the liquid temperature.

Figure 8 relates to a similar measurement as illustrated in Figure 7, i.e. transmission times were evaluated using the second (or third) receiver for different urea concentrations in water. However, the temperature of the liquid was kept constant (at around 30°C). It can be clearly seen that the transmission time decreases with increasing urea concentrations such that a transmission time determined with the second and the third receiver is well suited for determining the urea concentration in water. Similarly, concentrations of other substances can be determined.

### Reference signs

- 1: receptacle
- 1': acoustic waveguide
- 2: liquid
- 3: transmitter
- 4: second receiver
- 5: first receiver
- 6: third receiver
- 11: side wall
- 100: first plate
- 101: second plate
- 111: inner side wall
- 112: outer side wall
- 1111: first side wall portion
- 1112: second side wall portion
- A: volume sound wave
- B: surface wave

## Claims

1. A method for determining characteristics of a medium, comprising the steps of:
a) providing a container (1, 1') delimiting an interior space filled with the medium (2) to be characterized such that an inner surface of a side wall (111) of the container (1, 1') forms an interface with the medium (2),
b) exciting acoustic waves (B) in the container side wall (111) by means of at least one transmitter (3),
c) converting at least a part of the energy associated with the acoustic waves (B) excited in the side wall (111) of the container (1, 1') into volume sound waves (A) of the medium (2),
d) reconverting at least a part of the energy associated with the volume sound waves (A) into acoustic waves in container side wall (111),
**characterized by**
receiving acoustic waves evoked by the transmitter (3) by at least a first and a second receiver (5),
determining a temperature of the medium (2) and/or the container side wall (111) from a signal generated by the first receiver (5) upon receipt of acoustic waves (B) travelling from the transmitter (3) to the first receiver (5) in the container side wall (100, 111),
determining characteristics of the medium (2) from a signal generated by the second receiver (4) upon receipt of acoustic waves generated by reconverting energy of the volume sound waves (A) according to step d), wherein
the temperature determined using the signal of the first receiver (5) is taken into account when evaluating the signal of the second receiver (4).

2. The method as claimed in claim 1, **characterized in that** the characteristics of the medium (2) and the temperature are determined simultaneously.

3. The method as claimed in claim 1 or 2, **characterized in that** step b) comprises generating acoustic waves (B) in the container side wall (111) in the form of at least one acoustic pulse, wherein steps f) and g) comprise determining a transmission time and/or an amplitude of the pulse and determining characteristics of the medium (2) and the temperature of the medium and/or the container side wall (111) using the transmission time and/or the amplitude of the acoustic pulse.

4. The method as claimed in one of the preceding claims, **characterized in that** the characteristics of the medium (2) determined in step f) comprise a concentration of at least one substance in the medium.

5. The method as claimed in one of the preceding claims, **characterized in that** steps f) and g) comprise determining both the characteristics of the medium (2) and the temperature at a first point in time and determining both the characteristics of the medium (2) and the temperature at a second point in time.

6. The method as claimed in one of the preceding claims, **characterized in that** the frequency of the acoustic waves generated by the transmitter (3) is chosen in such a way that Lamb waves or Lamb-Rayleigh waves are excited in the container side wall (111).

7. Device for determining characteristics of a medium and in particular for carrying out the method as claimed in one of the preceding claims, comprising
- a container (1, 1') delimiting an interior space filled with the medium (2) to be characterized such that an inner surface of a side wall (111) of the container (1, 1') forms an interface with the medium (2);
- at least one transmitter (3) for exciting acoustic waves in the container side wall (111) in such a way that at least a part of the energy associated with the acoustic waves excited in the side wall of the container (1, 1') is converted into volume sound waves (A) of the medium (2), wherein at least a part of the energy associated with the volume sound waves is reconverted into acoustic waves in the container side wall (111),
**characterized by**
- at least a first and a second receiver (5, 4) for receiving acoustic waves evoked by the transmitter (3);
- means for determining a temperature of the medium (2) and/or the container side wall (111) from a signal generated by the first receiver (5) upon receipt of acoustic waves travelling from the transmitter (3) to the first receiver (5) in the container side wall, and
- means for determining characteristics of the medium (2) from a signal generated by the second receiver (4) upon receipt of acoustic waves generated by reconverting energy of the volume sound waves generated in the medium (2), wherein
- the temperature determined by the means for determining a temperature is taken into account by the means for determining characteristics of the medium when evaluating the signal of the second receiver (4).

8. The device as claimed in claim 7, **characterized in that** the first receiver (5) is arranged on a first portion (100, 1111) of the container side wall (111) and the second receiver (4) is arranged on a second portion (101, 1112) of the container side wall, the first and the second side wall portion being arranged opposite to one another along a direction perpendicular to the first and/or the second side wall portion.

9. The device as claimed in claim 8, **characterized in that** the transmitter (3) and the first receiver (5) are arranged on the first portion (100, 1111) of the container side wall (111) and the second receiver (4) is arranged on the second portion (101, 1112) of the side wall (111).

10. The device as claimed in claim 9, **characterized in that** a third receiver (6) is arranged on the second portion (101, 1112) of the side wall (111).

11. The device as claimed in claims 7 to 10, **characterized in that** the container (1, 1') comprises a first and a second plate or consists of a first and a second plate, the first plate forming the first side wall portion and the second plate forming the second side wall portion.

12. The device as claimed in claims 7 to 11, **characterized in that** the container (1, 1') consists of a receptacle, wherein the first and the second side wall portion (1111, 1112) are integrally connected to one another.

## Patentansprüche

1. Verfahren zur Bestimmung von Eigenschaften eines Mediums, mit den folgenden Schritten:
a) Bereitstellen eines Behälters (1, 1'), der einen mit dem zu charakterisierenden Medium (2) gefüllten Innenraum begrenzt, so dass eine Innenfläche einer Seitenwand (111) des Behälters (1, 1') eine Grenzfläche zu dem Medium (2) bildet,
b) Anregen von Schallwellen (B) in der Behälterseitenwand (111) mit Hilfe mindestens eines Senders (3),
c) Umwandeln mindestens eines Teils der zu den in der Seitenwand (111) des Behälters (1, 1') angeregten Schallwellen (B) gehörigen Energie in Volumenschallwellen (A) des Mediums (2),
(d) Rückwandeln mindestens eines Teils der zu den Volumenschallwellen (A) gehörigen Energie in Schallwellen in der Behälterseitenwand (111),
**gekennzeichnet durch**
Empfangen von durch den Sender (3) hervorgerufenen Schallwellen durch mindestens einen ersten und einen zweiten Empfänger (5),
Ermitteln einer Temperatur des Mediums (2) und/oder der Behälterseitenwand (111) aus einem Signal, das von dem ersten Empfänger (5) beim Empfang der von dem Sender (3) zu dem ersten Empfänger (5) wandernden Schallwellen (B) in der Behälterseitenwand (100, 111) erzeugt wird,
Ermitteln von Eigenschaften des Mediums (2) aus einem Signal, das von dem zweiten Empfänger (4) beim Empfang von durch die Rückwandlung von Energie der Volumenschallwellen (A) gemäß Schritt d) erzeugten Schallwellen erzeugt wird, wobei
die unter Verwendung des Signals des ersten Empfängers (5) ermittelte Temperatur bei der Auswertung des Signals des zweiten Empfängers (4) berücksichtigt wird.

2. Verfahren nach Anspruch 1, **dadurch gekennzeichnet, dass** die Eigenschaften des Mediums (2) und die Temperatur gleichzeitig ermittelt werden.

3. Verfahren nach Anspruch 1 oder 2, **dadurch gekennzeichnet, dass** Schritt b) die Erzeugung von Schallwellen (B) in der Behälterseitenwand (111) in Form mindestens eines Schallimpulses umfasst, wobei in Schritt f) und g) eine Übertragungszeit und/oder eine Amplitude des Impulses ermittelt wird und Eigenschaften des Mediums (2) sowie die Temperatur des Mediums und/oder der Behälterseitenwand (111) unter Verwendung der Übertragungszeit und/oder der Amplitude des Schallimpulses ermittelt werden.

4. Verfahren nach einem der vorhergehenden Ansprüche, **dadurch gekennzeichnet, dass** die in Schritt f) ermittelten Eigenschaften des Mediums (2) eine Konzentration mindestens einer Substanz in dem Medium umfassen.

5. Verfahren nach einem der vorhergehenden Ansprüche, **dadurch gekennzeichnet, dass** in Schritt f) und g) sowohl die Eigenschaften des Mediums (2) als auch die Temperatur zu einem ersten Zeitpunkt ermittelt werden und sowohl die Eigenschaften des Mediums (2) also auch die Temperatur zu einem zweiten Zeitpunkt ermittelt werden.

6. Verfahren nach einem der vorhergehenden Ansprüche, **dadurch gekennzeichnet, dass** die Frequenz der durch den Sender (3) erzeugten Schallwellen so gewählt ist, dass Lamb-Wellen oder Lamb-Rayleigh-Wellen in der Behälterseitenwand (111) erzeugt werden.

7. Vorrichtung zur Ermittlung von Eigenschaften eines Mediums und insbesondere zur Durchführung des Verfahrens nach einem der vorhergehenden Ansprüche, umfassend
- einen Behälter (1, 1'), der einen mit dem zu charakterisierenden Medium (2) gefüllten Innenraum begrenzt, so dass eine Innenfläche einer Seitenwand (111) des Behälters (1, 1') eine Grenzfläche zu dem Medium (2) bildet;
- mindestens einen Sender (3) zum Anregen von Schallwellen in der Behälterseitenwand (111), so dass mindestens ein Teil der zu den in der Seitenwand des Behälters (1, 1') angeregten Schallwellen gehörigen Energie in Volumenschallwellen (A) des Mediums (2) umgewandelt wird, wobei mindestens ein Teil der zu den Volumenschallwellen gehörigen Energie in Schallwellen in der Behälterseitenwand (111) rückgewandelt wird,
**gekennzeichnet durch**
- mindestens einen ersten und einen zweiten Empfänger (5, 4) zum Empfangen von durch den Sender (3) hervorgerufenen Schallwellen;
- Mittel zum Ermitteln einer Temperatur des Mediums (2) und/oder der Behälterseitenwand (111) aus einem Signal, das von dem ersten Empfänger (5) beim Empfang der von dem Sender (3) zu dem ersten Empfänger (5) wandernden Schallwellen in der Behälterseitenwand erzeugt wird, und
- Mittel zum Ermitteln von Eigenschaften des Mediums (2) aus einem Signal, das von dem zweiten Empfänger (4) beim Empfang von Schallwellen erzeugt wird, die durch Rückwandlung von Energie der in dem Medium (2) erzeugten Volumenschallwellen erzeugt werden, wobei
- die durch das Mittel zum Ermitteln einer Temperatur ermittelte Temperatur von dem Mittel zum Ermitteln von Eigenschaften des Mediums bei der Auswertung des Signals des zweiten Empfängers (4) berücksichtigt wird.

8. Vorrichtung nach Anspruch 7, **dadurch gekennzeichnet, dass** der erste Empfänger (5) auf einem ersten Abschnitt (100, 1111) der Behälterseitenwand (111) angeordnet ist und der zweite Empfänger (4) auf einem zweiten Abschnitt (101, 1112) der Behälterseitenwand angeordnet ist, wobei der erste und der zweite Seitenwandabschnitt einander gegenüberliegend entlang einer Richtung senkrecht zu dem ersten und/oder dem zweiten Seitenwandabschnitt angeordnet sind.

9. Vorrichtung nach Anspruch 8, **dadurch gekennzeichnet, dass** der Sender (3) und der erste Empfänger (5) auf dem ersten Abschnitt (100, 1111) der Behälterseitenwand (111) angeordnet sind und der zweite Empfänger (4) auf dem zweiten Abschnitt (101, 1112) der Seitenwand (111) angeordnet ist.

10. Vorrichtung nach Anspruch 9, **dadurch gekennzeichnet, dass** ein dritter Empfänger (6) auf dem zweiten Abschnitt (101, 1112) der Seitenwand (111) angeordnet ist.

11. Vorrichtung nach Anspruch 7 bis 10, **dadurch gekennzeichnet, dass** der Behälter (1, 1') eine erste und eine zweite Platte umfasst oder aus einer ersten und einer zweiten Platte besteht, wobei die erste Platte den ersten Seitenwandabschnitt bildet und die zweite Platte den zweiten Seitenwandabschnitt bildet.

12. Vorrichtung nach Anspruch 7 bis 11, **dadurch gekennzeichnet, dass** der Behälter (1, 1') aus einem Gefäß besteht, wobei der erste und der zweite Seitenwandabschnitt (1111, 1112) einstückig miteinander verbunden sind.

## Revendications

1. Procédé de détermination des caractéristiques d'un milieu, comprenant les étapes suivantes :
a) fournir un récipient (1, 1') délimitant un espace intérieur rempli par le milieu (2) à caractériser de sorte qu'une face intérieure d'une paroi latérale (111) du récipient (1, 1') forme une interface avec le milieu (2),
b) exciter des ondes acoustiques (B) dans la paroi latérale du récipient (111) au moyen d'au moins un émetteur (3),
c) convertir au moins un partie de l'énergie associée aux ondes acoustiques (B) excitées dans la paroi latérale (111) du récipient (1, 1') en ondes sonores en volume (A) du milieu (2),
d) reconvertir au moins une partie de l'énergie associée aux ondes sonores en volume (A) en ondes acoustiques dans la paroi latérale du récipient (111),
**caractérisé par**
la réception d'ondes acoustiques provoquées par l'émetteur (3) par au moins un premier et un deuxième récepteur (5),
la détermination de la température du milieu (2) et/ou de la paroi latérale du récipient (111) à partir d'un signal produit par le premier récepteur (5) à la réception d'ondes acoustiques (B) se propageant depuis l'émetteur (3) jusqu'au premier récepteur (5) dans la paroi latérale du récipient (100, 111),
la détermination de caractéristiques du milieu (2) à partir d'un signal produit par le deuxième récepteur (4) à la réception d'ondes acoustiques produites en reconvertissant de l'énergie des ondes sonores en volume (5) selon l'étape d), dans lequel
la température déterminée au moyen du signal du premier récepteur (5) est prise en compte lors de l'évaluation du signal du deuxième récepteur (4).

2. Procédé selon la revendication 1, **caractérisé en ce que** les caractéristiques du milieu (2) et la température sont déterminés simultanément.

3. Procédé selon la revendication 1 ou 2, **caractérisé en ce que** l'étape b) comprend la production d'ondes acoustiques (B) dans la paroi latérale du récipient (111) sous la forme d'au moins une impulsion acoustique, dans lequel les étapes f) et g) comprennent la détermination du temps d'émission et/ou de l'amplitude de l'impulsion et la détermination de caractéristiques du milieu (2) et de la température du milieu et/ou de la paroi latérale du récipient (111) au moyen du temps d'émission et/ou de l'amplitude de l'impulsion acoustique.

4. Procédé selon l'une quelconque des revendications précédentes, **caractérisé en ce que** les caractéristiques du milieu (2) déterminées par l'étape f) comprennent la concentration d'au moins une substance dans le milieu.

5. Procédé selon l'une quelconque des revendications précédentes, **caractérisé en ce que** les étapes f) et g) comprennent la détermination à la fois des caractéristiques du milieu (2) et de la température à un premier moment et la détermination à la fois des caractéristiques du milieu (2) et de la température à un deuxième moment.

6. Procédé selon l'une quelconque des revendications précédentes, **caractérisé en ce que** la fréquence des ondes acoustiques produites par l'émetteur (3) et choisie de manière à ce que des ondes de Lamb ou des ondes de Lamb-Rayleigh sont excitées dans la paroi latérale du récipient (111).

7. Dispositif pour déterminer des caractéristiques d'un milieu et en particulier pour réaliser le procédé selon l'une quelconque des revendications précédentes, comprenant
- un récipient (1, 1') délimitant un espace intérieur rempli par le milieu (2) à caractériser de sorte qu'une face intérieure de la paroi latérale (111) du récipient (1, l') forme une interface avec le milieu (2) ;
- au moins un émetteur (3) pour exciter des ondes acoustiques dans la paroi latérale du récipient (111) de manière à ce qu'au moins une partie de l'énergie associée aux ondes acoustiques excitées dans la paroi latérale du récipient (1, 1') est convertie en ondes sonores en volume (A) du milieu (2), dans lequel au moins un partie de l'énergie associée aux ondes sonores en volume et reconvertie en ondes acoustiques dans la paroi latérale du récipient (111),
**caractérisé par**
- au moins un premier et un deuxième récepteur (5, 4) pour recevoir des ondes acoustiques provoquées par l'émetteur (3) ;
- des moyens de détermination de la température du milieu (2) et/ou de la paroi latérale du récipient (111) à partir d'un signal produit par le premier récepteur (5) à la réception d'ondes acoustiques se propageant depuis l'émetteur (3) jusqu'au premier récepteur (5) dans la paroi latérale du récipient, et
- des moyens de détermination des caractéristiques du milieu (2) à partir d'un signal produit par le deuxième récepteur (4) à la réception d'ondes acoustiques produites en reconvertissant de l'énergie des ondes sonores en volume produites dans le milieu (2), dans lequel
- la température déterminée pas les moyens de détermination de température est prise en compte par les moyens de détermination des caractéristiques du milieu lors de l'évaluation du signal du deuxième récepteur (4).

8. Dispositif selon la revendication 7, **caractérisé en ce que** le premier récepteur (5) est disposé sur une première partie (100, 1111) de la paroi latérale du récipient (111) et le deuxième récepteur (4) est disposé sur un deuxième partie (101, 1112) de la paroi latérale du récipient, la première et la deuxième partie de paroi latérale étant disposées en face l'une de l'autre le long d'une direction perpendiculaire à la première et/ou la deuxième partie de la paroi latérale.

9. Dispositif selon la revendication 8, **caractérisé en ce que** l'émetteur (3) et le premier récepteur (5) sont disposés sur un première partie (100, 1111) de la paroi latérale du récipient (111) et le deuxième récepteur (4) est disposé sur la deuxième partie (101, 1112) que la paroi latérale (111).

10. Dispositif selon la revendication 10, **caractérisé en ce qu'**un troisième récepteur (6) est disposé sur une deuxième partie (101, 1112) de la paroi latérale (111).

11. Dispositif selon les revendications 7 à 10, **caractérisé en ce que** le récipient (1, l') comprend une première et une deuxième plaque ou est constitué d'une première et d'une deuxième plaque, la première plaque formant la première partie de la paroi latérale et la deuxième plaque formant la deuxième partie de la paroi latérale.

12. Dispositif selon les revendications 7 à 11, **caractérisé en ce que** le récipient (1, 1') est constitué d'un réceptacle, dans lequel la première et la deuxième partie de paroi latérale (1111, 1112) sont reliées entre elles d'une seule pièce.
